# EUROPÄISCHE PATENTANMELDUNG

(11) **EP 1 437 642 A2**
(43) Veröffentlichungstag der Anmeldung: **14.07.2004**
(21) Anmeldenummer: 03029428.4
(22) Anmeldetag: 19.12.2003
(51) Int. Cl.: G06F 3/023

(54) **Gerät zum Bedienen und Beobachten mit einem Schnelleingabetastenfeld**

(30) Priorität: 10.01.2003 DE 20300256 U; 28.08.2003 DE 20313453 U
(71) Anmelder: SIEMENS AKTIENGESELLSCHAFT, 80333 München (DE)
(72) Erfinder: Hegmann, Michael, 90419 Nürnberg (DE); Körner, Mario, 91058 Erlangen (DE)

(57) **Zusammenfassung**

Das erfindungsgemäße HMI Gerät dient zum Beobachten und Bedienen eines technischen Prozesses. Es enthält ein Anzeigeelement (B) zumindest für Prozessgrößen (PW) und zumindest ein Tastenfeld (TV). Einer Taste (TV2) des Tastenfeldes (TV) ist dabei eine Gruppe von Zeichen (a,b,c,2,ä,à,æ,å,ç) zugeordnet. Eine Verarbeitungseinrichtung (VE) bringt pro Betätigung der Taste (TV2) des Tastenfeldes (TV) ein anderes Zeichen (2) aus der Gruppe von zugeordneten Zeichen (a,b,c,2, ...) auf dem Anzeigeelement (B) in einem Prozesswert (PW) zur Anzeige und registriert das Zeichen (2) aus der Gruppe als aktuelles Eingabezeichen (PWS), welches vor dem Ausbleiben weiterer Betätigungen der Taste (TV2) für einen vorbestimmten Zeitraum angezeigt worden ist.

## Beschreibung

Die Erfindung betrifft ein HMI Gerät zum Beobachten und Bedienen eines technischen Prozesses.

Technische Einrichtungen werden mit Hilfe von digitalen, programmierbaren Datenverarbeitungssystemen gesteuert und bedient. Unter einer technischen Einrichtung wird jede Art von technischen Geräten und Systemen sowohl in Einzelanordnung als auch in einer datentechnischen Vernetzung z.B. über einen Feldbus verstanden. So sind unter technischen Einrichtungen bei einer industriellen Anwendung einzelne Betriebsmittel zu verstehen, wie z.B. Antriebe, Bearbeitungsmaschinen, intelligente Messgeber, Sensoren, u.v.m.. Eine technische Einrichtung kann aber auch eine gesamte Produktionsanlage sein, bei der mit lokal verteilten Betriebsmitteln ein gesamter technischer Prozess betrieben wird, z.B. eine chemische Anlage, eine Fertigungsstraße oder eine verarbeitende Anlage.

Technische Einrichtungen werden mittels digitaler, programmierbarer Datenverarbeitungssystemen gesteuert und bedient, die vielfach als ein Automatisierungssystem bzw. ein Bestandteil davon ausgeführt sind. Dabei weisen Automatisierungssysteme spezielle Geräte auf, welche die Schnittstelle zwischen einem Bediener und dem System bilden. Solche Geräte werden als HMI Einrichtung bezeichnet, d.h. Human Machine Interface. Weiterhin werden diese Geräte als Vorrichtungen zum "Bedienen- und Beobachten" technischer Einrichtungen bezeichnet, abgekürzt "B+B Geräte". Diese sind den zur direkten Steuerung der technischen Einrichtung dienenden Geräten vorgelagert, z.B. den "PLC" Programmable Logic Controllern. Hierdurch wird eine zentrale Steuereinrichtung entlastet, z.B. eine speicherprogrammierbare Steuerung SPS.

Der Begriff HMI Gerät ist ein Oberbegriff und umfasst auch alle zu dieser Gruppe von Geräten gehörigen Komponenten. Als Beispiele für derartige Komponenten sollen z.B. "Operator Panels", die häufig als "Bedienpanels" bzw. kurz als "OP" bezeichnet werden, und als HMI Geräte bzw. dazugehörige Programmiergeräte eingesetzte Industrie-Personal-Computer IPC genannt werden. HMI Geräte übernehmen wegen ihrer besonderen Funktionalität z.B. in einem vernetzten Automatisierungssystem Funktionen, die allgemein als Vorgabe und Nachbearbeitung von Daten der zu steuernden technischen Einrichtung angesehen werden können. Diese Funktion wird mit "Supervisor Control and Data Akquisition" (SCADA) bezeichnet. Hierzu wird von einem HMI Gerät eine spezielle Software ausgeführt. Hiermit werden Funktionen bereitgestellt, die Komfort, Qualität und Sicherheit einer Bedienung durch eine Bedienperson verbessern, z.B. die Übersicht über die zu bedienende Einrichtung und die Fehlerfreiheit von Bedienungen. So können über HMI Geräte z.B. interaktive Prozessabbilder der zu bedienenden technischen Einrichtung visualisiert und bedient, aber auch projektiert und generiert werden. Hiermit ist einerseits eine selektive Anzeige von Reaktionen der technischen Einrichtung möglich, meist in Form von Messwerten und Meldungen. Andererseits wird es durch gezielte Vorgabe von Bedienhandlungen ermöglicht, die technische Einrichtung in gewünschte Zustände zu überführen. Zusätzlich zu diesen Funktionen "Beobachten und Bedienen" können mit einem HMI Gerät auch anlagenspezifische Projektierungen möglich sein, z.B. die Projektierung von interaktiven Prozessabbildern.

Für die obigen Aufgaben müssen regelmäßig eine Fülle von Eingaben durch Bedienpersonen vorgenommen werden. Hierzu weisen HMI Geräte Felder von Eingabetasten auf, die z.B. entweder in Form von spritzwassergeschützten Microschaltern oder in programmtechnischer Form als virtuelle Tastatur auf einem Touchscreen ausgeführt sein können. Besonders bei der Ausführung eines HMI Geräts in Form eines Bedienpanels ist dessen Frontseite vielfach mit einer Vielzahl von Eingabetasten versehen.

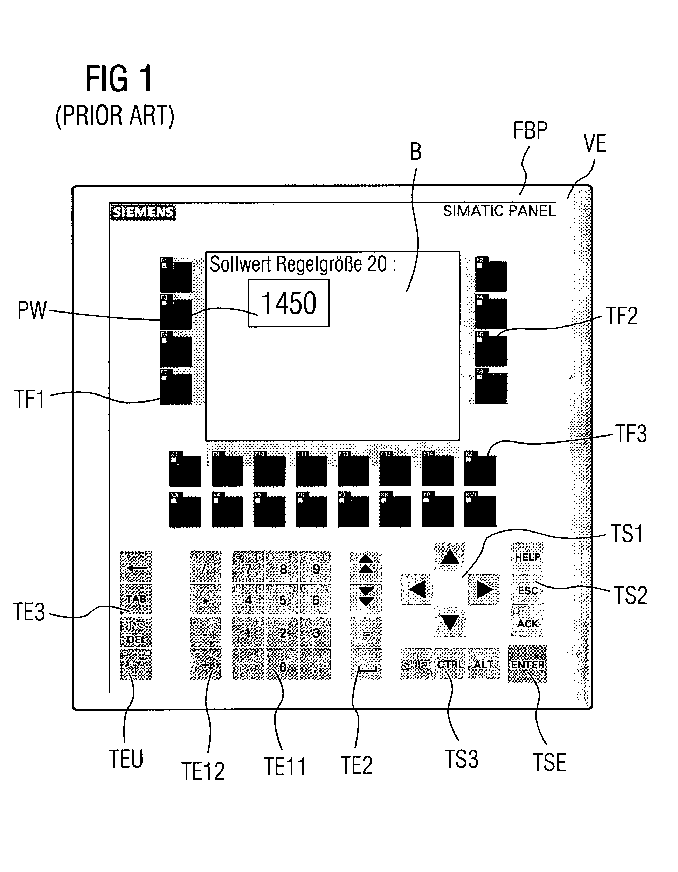

In Figur 1 ist beispielhaft ein bekanntes, als ein Bedienpanel ausgeführtes HMI Gerät in einer Frontansicht gezeigt. Das Bedienpanel ist in eine Arbeitsfläche z.B. in einem Schaltschrank eingelassen, so dass die Frontseite FBP des Bedienpanels über deren Ränder auf der umgebenden Arbeitsfläche aufliegt. Die Frontseite FBP weist ein Anzeigeelement B auf, z.B. eine LCD Einheit oder einen Touchscreen. Hierauf können z.B. Prozessmeldungen, dynamische Prozessübersichtsbilder, Meßwerte u.v.m. zur Ansicht gebracht werden. In Figur 1 wird beispielsweise eine Prozessgröße PW anzeigt, die den Sollwert einer Regelgröße 20 darstellt. Dieser ist aktuell auf "1450" eingestellt. Während des Betriebs eines technischen Prozesses ist es regelmäßig notwendig, Sollwerte an veränderte Betriebsbedingungen anzupassen. So kann es z.B. notwendig werden, einen Sollwert geringfügig zu erhöhen bzw. zu erniedrigen oder eine den Text einer Meldung neu zu projektieren. Für derartige alphanumerische Eingaben stehen einem Bediener Eingabetasten zur Verfügung. Um die Anzahl der Tasten auf der Frontseite FBP zu begrenzen ist es üblich geworden, einer Eingabetaste mehr als ein Zeichen zuzuordnen.

Im Beispiel der FIG 1 sind hierzu mehrere Felder von Eingabetasten vorhanden. So weisen die 3 mal 4 Eingabetasten in einem ersten Feld TE11 eine Mehrfachbelegung mit alphanumerischen Zeichen auf und dienen somit sowohl zur Zahlen- als auch Texteingabe. Das Feld TE11 wird durch ein daneben liegendes zweites Feld TE12 von 1 mal 4 Eingabetasten ergänzt, dessen Tasten mit Sonderzeichen und Buchstaben mehrfach belegt sind. Schließlich sind ein drittes Feld TE2 mit 1 mal 4 und ein viertes Feld TE3 mit 1 mal 3 Eingabetasten vorhanden. Deren Tasten sind mit Sonderzeichen und standardmäßigen Editierfunktionen mehrfach belegt, z.B. den Funktionen TAB, DEL.

Bei der bekannten, in FIG 1 dargestellten Ausführung ist die Mehrfachbelegung der Tasten in den Tastenfeldern TE11, TE12, TE2, TE3 in logischen Ebenen strukturiert. So liegen in Fig. 1 die Zeichen mit schwarzer Beschriftung in einer ersten logischen Ebene und die mit weißer Beschriftung oben links bzw. oben rechts auf einer Taste befindlichen Zeichen in einer zweiten bzw. dritten Ebene. Die Aktivierung einer gewünschten logischen Ebene erfolgt im Beispiel der Fig. 1 durch eine Umschalttaste TEU, die in der unteren linken Ecke der Frontseite FBP platziert ist. Ein Bediener kann durch sukzessive Betätigung der Umschalttaste TEU die einzelnen logischen Ebenen aktivieren und damit z.B. die Eingabe von Zahlen 0, 1, 2, ... oder die Eingabe von Buchstaben aus einer ersten Gruppe A, C, E, ... oder die Eingabe von Buchstaben aus einer zweiten Gruppe B, D, F, ... ermöglichen. Weiterhin kann der Bediener an Leuchtpunkten, die als Statusanzeigen oben links und oben rechts auf der mit "A-Z" beschrifteten Umschalttaste TEU angebracht sind, die bei den Eingabetastenfeldern TE11, TE12, TE2, TE3 jeweils aktiven logischen Ebenen ablesen.

Die in FIG 1 dargestellte, bekannte Ausführung für ein HMI Gerät weist den Nachteil auf, dass ein Bediener bei einer Dateneingabe über die Tastenfelder vielfach zwischen den oben beschriebenen, logischen Ebenen umschalten muss. Dies tritt besonders bei der Eingabe von alphanumerischen Zeichenketten auf, was z.B. bei einer Editierung von Meldetexten notwendig ist. Es ist damit keine geschlossene Eingabe von alphanumerischen Zeichenketten quasi in einem Zuge möglich. Vielmehr ist ständig eine Umschaltung zwischen den logischen Ebenen notwendig. Hierdurch wird die Aufmerksamkeit eines Bedieners stark beansprucht, da dieser ständig einen visuellen Abgleich zwischen der Zuordnung des aktuell einzugebenden Zeichens zur dazugehörigen logischen Ebene und dem momentanen Status der Umschalttaste TEU vornehmen muss.

Zusätzlich zu den oben erläuterten Feldern von Eingabetasten weist das in Fig. 1 dargestellte, bekannte HMI Gerät noch ein erstes Feld TF1 von frei programmierbaren Funktionstasten F1, F3, F5, F7 links vom Anzeigeelement B, ein zweites Feld TF2 von frei programmierbaren Funktionstasten F2, F4, F6, F8 rechts vom Anzeigeelement B und ein drittes Feld TF3 von frei programmierbaren Funktionstasten F9-F14, K1-K10 unterhalb des Anzeigeelementes B auf. Weiterhin ist vorhanden ein erstes Feld TS1 von Steuertasten, z.B. zur Cursorsteuerung, ein zweites Feld TS2 von Steuertasten, z.B. die mit den Steuerfunktionen HELP, ESC, ACK belegt sind, und ein drittes Feld TS3 von Steuertasten, z.B. die mit den Steuerfunktionen SHIFT, CTRL, ALT belegt sind. Schließlich ist im rechten unteren Eck der Frontseite FBP eine mit ENTER beschriftete Quittierungstaste TSE angeordnet. Die Verwaltung der den Eingabetasten zugeordneten logischen Ebenen und die datentechnische Weiterverarbeitung von darüber vorgenommenen Eingaben erfolgt durch eine programmgesteuerte Verarbeitungseinheit, die in einem Gehäuse hinter der Frontseite FBP untergebracht und in FIG 1 durch das Bezugszeichen VE symbolisiert ist.

Der Erfindung liegt die Aufgabe zu Grunde, ein HMI Gerät von der im Beispiel der FIG 1 beschriebenen Art so anzupassen, dass Eingaben von alphanumerischen Zeichenketten über mehrfach belegte Eingabetasten von Bedienern mit geringerem Aufwand an visueller Aufmerksamkeit vorgenommen werden können.

Die der Erfindung zu Grunde liegende Aufgabe wird mit den Merkmalen des im Anspruch 1 angegebenen HMI Geräts gelöst. Das erfindungsgemäße HMI Gerät dient zum Beobachten und Bedienen eines technischen Prozesses. Es enthält ein Anzeigeelement zumindest für Prozessgrößen und zumindest ein Tastenfeld. Einer Taste des Tastenfeldes ist dabei eine Gruppe von Zeichen zugeordnet. Eine Verarbeitungseinrichtung bringt pro Betätigung der Taste des Tastenfeldes ein anderes Zeichen aus der Gruppe von zugeordneten Zeichen auf dem Anzeigeelement in einem Prozesswert zur Anzeige und registriert das Zeichen aus der Gruppe als aktuelles Eingabezeichen, welches vor dem Ausbleiben weiterer Betätigungen der Taste für einen vorbestimmten Zeitraum angezeigt worden ist.

Die Erfindung weist den Vorteil auf, dass bei einem HMI Gerät nun einer Taste eines Tastenfeldes eine Gruppe von Zeichen zugeordnet sind, die bedienungstechnisch untereinander verkettet und logisch gleichwertig sind. Jede Taste stellt somit eine autarke Eingabeeinheit für die jeweils zugeordnete Gruppe von Zeichen dar. Eine bedienungstechnische Verbindung unterschiedlicher Tasten durch übergreifende, logische Zeichenebenen und die damit verbundenen visuellen Aufmerksamkeitsprobleme bei Benutzern entfallen damit. Mit der Erfindung werden somit Eingabetechniken für Zeichen, die bereits in kommerziellen Bereichen der Technik Eingang gefunden haben, z.B. bei der Zeicheneingabe an Mobiltelefonen, auch im industriellen Umfeld nutzbar gemacht. Dies ist besonders bei HMI Geräten von Vorteil, welche die Schnittstelle zwischen einem Bediener und den zur Beobachtung und Steuerung eines technischen Prozesses eingesetzten technischen Mitteln darstellen.

Vorteilhafte Weiterbildungen des erfindungsgemäßen HMI Geräts sind in den Unteransprüchen angegeben. Ein Unteranspruch ist auch gerichtet auf ein Automatisierungssystem mit einem entsprechenden HMI Gerät. Weiterhin zeigen
- FIG 1: ein beispielhaftes, oben bereits erläutertes HMI Gerät gemäß dem Stand der Technik, und
- FIG 2: eine bevorzugte Ausführungsform für ein gemäß der Erfindung gestaltetes HMI Gerät in einer Draufsicht.

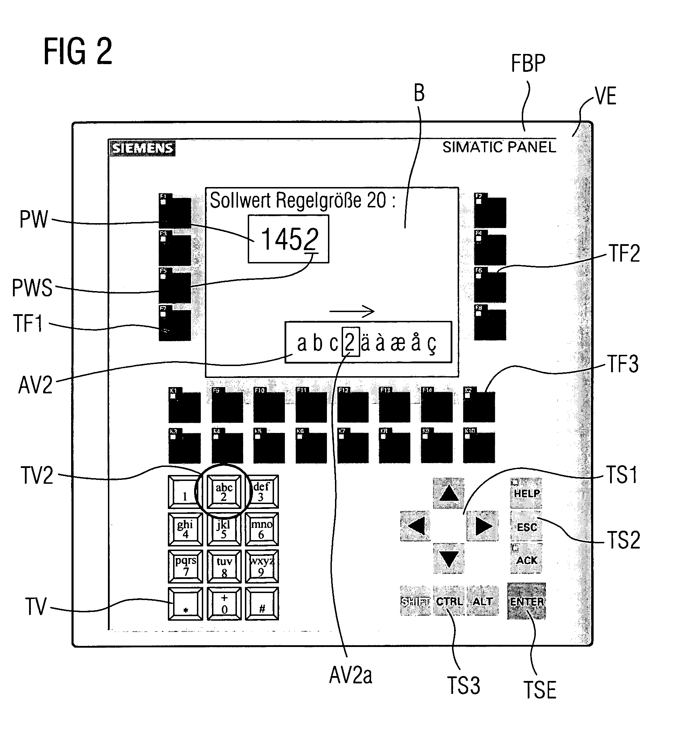

Die in FIG 2 gezeigte vorteilhafte Ausführung für ein gemäß der Erfindung gestaltetes HMI Gerät ist mit dem HMI Gerät von Fig. 1 vergleichbar. Aus Gründen der besseren Übersicht wird somit bei Teilen, die das gleiche Bezugszeichen aufweisen, auf die Erläuterungen zu FIG 1 Bezug genommen. Erfindungsgemäß sind jedoch die in der Ausführung von FIG 1 eingesetzten Felder von Eingabetasten TE11, TE12, TE2, TE3 in der Ausführung von FIG 2 durch ein einziges Feld TV mit Schnelleingabetasten ersetzt. Jeder Taste des Feldes ist dabei eine Gruppe von Zeichen zugeordnet. Die Zeichen können kettenartig durch wiederholte Betätigung der Taste aufgerufen werden. Dies soll am Beispiel der Taste TV2 stellvertretend für die übrigen Tasten des Feldes erläutert werden.

Der Taste TV2 des Tastenfeldes TV ist beispielhaft die Gruppe von Zeichen a, b, c, 2, ä, à, æ, å, ç zugeordnet. Selbstverständlich kann der Taste eine beliebig anders zusammengesetzte, und kleinere oder auch umfangreichere Zeichenkette zugeordnet sein. Die Verarbeitungseinrichtung VE bringt pro Betätigung der Taste TV2 des Schnelleingabetastenfeldes TV ein anderes Zeichen aus der Gruppe von zugeordneten Zeichen a, b, c, 2, ä, à, æ, å, ç auf dem Anzeigeelement B zur Anzeige und registriert das Zeichen aus der Gruppe als aktuelles Eingabezeichen, welches vor dem Ausbleiben weiterer Betätigungen der Taste TV2 für einen vorbestimmten Zeitraum angezeigt worden ist. So wird bei der in FIG 2 dargestellten Situation gerade das Zeichen 2 aus der Gruppe von zugeordneten Zeichen auf dem Anzeigeelement B in dem Prozesswert PW zur Anzeige gebracht.

In der Praxis kann dieser Fall z.B. dann auftreten, wenn ein Bediener den Sollwert für die Regelgröße 20, der gemäß FIG 1 den Wert "1450" aufwies, auf "1420" erhöhen muss. Hierzu platziert der Bediener vorteilhaft eine Einfügemarke an die entsprechende Position im Feld der Prozessgröße PW und aktiviert die Zahl 2 durch wiederholte Betätigung der Taste TV2. Es ist vorteilhaft, wenn während der Tastenbedienung alle zugeordneten Zeichen a, b, c, 2, ä, à, æ, ä, ç auf dem Anzeigeelement B in einem separaten Fenster AV2 zusätzlich zur Anzeige gebracht werden und das aktuell aktive Zeichen darin hervorgehoben dargestellt ist. Im dargestellten Beispiel muss ein Bediener die Taste TV2 folglich zumindest viermal betätigen, um vom Zeichen "a", über die Zeichen "b" und "c" zum gewünschten Zeichen "2" aus der Gruppe zu gelangen. Die Verarbeitungseinheit VE registriert das Zeichen 2 aus der Gruppe als aktuelles Eingabezeichen PWS in der Prozessgröße PW, wenn weitere Betätigungen der Taste TV2 ausbleiben und das Zeichen "2" für einen vorbestimmten Zeitraum angezeigt bleibt.

Ein HMI Gerät gemäß der vorliegenden Erfindung kann als ein stationäres Operator Panel, aber vorteilhaft auch als ein mobiles Hand - Held - Terminal zur Maschinenbedienung und Maschinenüberwachung ausgeführt sein. Die Erfindung bietet somit den Vorteil, dass sich eine in einer technischen Anlage eingesetzte Bedienperson während dieser Tätigkeit nicht auf besondere Bedienhandlungen einstellen muss, sondern auch im industriellen Umfeld die ihm möglicherweise bereits aus dem privaten Umfeld am Beispiel von Mobiltelefonen bekannten Bedienungen von Schnelleingabetastaturen einsetzen kann.

Eine in den Figuren nicht dargestellte, weitere Ausführung der Erfindung kann auch darin bestehen, dass das Anzeigeelement B des HMI Geräts als ein Touchscreen ausgeführt ist und das Tastenfeld TV in diesem Fall nicht in diskreter Form, sondern als Bildschirmmaske softwaremäßig nachgebildet ist.

Weiterhin kann ein Automatisierungssystem, das auf eine technische Einrichtung einwirkt, mindestens ein angeschaltetes oder integriertes, erfindungsgemäßes HMI Gerät aufweisen.

Bei einer weiteren Ausführung der Erfindung ist die Verarbeitungseinrichtung des HMI Geräts zusätzlich mit einer Textanalyseeinrichtung ausgerüstet. Diese greift auf ein oder mehrere Textverzeichnisse zurück, die auch fremd- oder mehrsprachig sein können. Dabei wird die Textanalysefunktion ausgelöst, wenn ein Benutzer für eine Eingabe eine Taste des Tastenfeldes betätigt. Nun werden die Zeichen aus der Gruppe, die der Taste zugeordnet sind, gemeinsam mit eventuell bereits vorhandenen, zusammenhängenden Eingabezeichen auf zumindest teilweise Übereinstimmungen mit Einträgen im Textverzeichnis überprüft. Werden bei dieser Überprüfung Einträge mit einem hohen Übereinstimmungsgrad erkannt, so werden diese Einträge auf dem Anzeigeelement als mögliche Eingabezeichenkette ausgegeben.

Bei der Projektierung bzw. der Bedienung und Beobachtung von technischen Anlagen stellt eine derartige Technik, eine erhebliche Verbesserung insbesondere der Bedienqualität dar. So können diese Textverzeichnisse vorteilhaft auf den bei der Bedienung und Beobachtung von technischen Anlagen erforderlichen Wortschatz und die benötigte Symbolik abgestimmt sein. Es können sogar Textverzeichnisse angelegt und in das erfindungsgemäße HMI Gerät geladen werden, die spezifisch auf die bei einer bestimmten technischen Anlage oder einem bestimmten Anlagentyp vorhandenen bzw. benötigten Begriffe abgestimmt sind.

Diese Ausführung stellt zum einen eine Erleichterung der Bedienung für einen Benutzer dar. Wird nämlich nach einer nur unvollständigen Eingabe vom Benutzer die auf dem Anzeigeelement vorgeschlagene Eingabezeichenkette akzeptiert, so sind keine weiteren Eingaben erforderlich. Weiterhin kann ein Benutzer die Häufigkeit der Betätigungen einer Taste reduzieren, indem er auf die von den Textanalysemitteln vorgeschlagenen Eingabezeichenketten zurückgreift, statt durch weitere Betätigungen einer Taste die weiteren Zeichen aus der zugeordneten Zeichengruppe zu aktivieren.

Der besondere Vorteil liegt aber gerade beim industriellen Einsatz. Hier kann nämlich durch anlagen-, typ- oder branchenspezifische Textverzeichnisse eine Vereinheitlichung bei der Eingabe von Texten herbeigeführt werden. Die Wahrscheinlichkeit, das ein Bediener eine von der Verarbeitungseinheit vorgeschlagene Eingabezeichenkette als Eingabe akzeptiert, und damit auf einen technologisch bzw. anlagenspezifisch vorkonfektionierten Begriff aus dem Textverzeichnis zurückgreift, nimmt bei dieser Ausführung der Erfindung deutlich zu.

Als ein Beispiel soll die Eingabe des Wortes "Antrieb" über das Tastenfeld TV des in Figur 2 dargestellten HMI Gerätes genannt werden. Durch Einsatz der obigen Ausführung der Erfindung ist es zur Eingabe dieses Wortes lediglich erforderlich, die Tasten mit den Nummern 2, 6, 8, 7, 4, 3 und 2 jeweils einmal zu betätigen. Da das gewünschte Wort "Antrieb" im technologischen bzw. anlagenspezifischen Textverzeichnis gespeichert ist, können die Textanalysemittel z.B. bei der Betätigung der Taste 6 selbständig erkennen, das aus der Gruppe der dieser Taste zugeordneten Zeichen "m", "n" und "o" der Buchstabe "n" eine Sinnbedeutung hat und zu dem Wort "Antrieb" einen hohen Überstimmungsgrad aufweist.

## Patentansprüche

1. HMI Gerät zum Beobachten und Bedienen eines technischen Prozesses, mit
a) einem Anzeigeelement (B) zumindest für Prozessgrößen (PW),
b) mindestens einem Tastenfeld (TV), wobei einer Taste (TV2) des Tastenfeldes (TV) eine Gruppe von Zeichen (a,b,c,2,...) zugeordnete ist, und mit einer
c) Verarbeitungseinrichtung (VE), welche
c1) pro Betätigung der Taste (TV2) des Tastenfeldes (TV) ein anderes Zeichen (2) aus der Gruppe von zugeordneten Zeichen (a,b,c,2,...) auf dem Anzeigeelement (B) in einem Prozesswert (PW) zur Anzeige bringt und
c2) das Zeichen (2) aus der Gruppe als aktuelles Eingabezeichen (PWS) registriert, welches vor dem Ausbleiben weiterer Betätigungen der Taste (TV2) für einen vorbestimmten Zeitraum angezeigt worden ist.

2. HMI Gerät nach Anspruch 1, wobei die Verarbeitungseinheit (VE) während einer Folge von Betätigungen der Taste (TV2) des Tastenfeldes (TV) zusätzlich die Gruppe von zugeordneten Zeichen (a,b,c,2,...) auf dem Anzeigeelement (B) zur Anzeige (AV2) bringt.

3. HMI Gerät nach Anspruch 2, wobei die Verarbeitungseinheit (VE) das zur aktuellen Zahl von Betätigungen der Taste gehörige Zeichen (2) aus der Gruppe von zugeordneten Zeichen (a,b,c,2,...) hervorgehoben zur Anzeige bringt.

4. HMI Gerät nach einem der vorangegangenen Ansprüche mit einem Tastenfeld (TV) von der Art der Tastatur eines mobilen Kommunikationsgeräts, insbesondere eines Mobiltelefons.

5. HMI Gerät nach einem der vorangegangenen Ansprüche mit einem Touchscreen als Anzeigeelement und einem darauf zur Anzeige gebrachten, virtuellen Tastenfeld.

6. HMI Gerät nach einem der vorangegangenen Ansprüche mit Sollwerten von Regelgrößen (PW) und editierbaren Meldungen des technischen Prozesses als Prozessgrößen (PW).

7. HMI Gerät zum Beobachten und Bedienen eines technischen Prozesses, mit
a) einem Anzeigeelement (B) zumindest für Prozesswerte (PW),
b) mindestens einem Tastenfeld (TV), wobei Tasten (TV2) des Tastenfeldes (TV) jeweils eine Gruppe von Zeichen (a,b,c,2,...) zugeordnete ist, und mit einer
c) Verarbeitungseinrichtung (VE), mit
c1) zumindest einem Textverzeichnis und
c2) Mitteln zur Textanalyse, welche bei Betätigung einer Taste (TV2) des Tastenfeldes (TV) die Zeichen aus der zugeordneten Gruppe (a,b,c,2,...) gemeinsam mit eventuell bereits vorhandenen, zusammenhängenden Eingabezeichen auf zumindest teilweise Übereinstimmungen mit Einträgen im Textverzeichnis überprüft, und Einträge mit einem hohen Übereinstimmungsgrad auf dem Anzeigeelement (B) als mögliche Eingabezeichenkette ausgibt.

8. HMI Gerät nach Anspruch 7, wobei das Textverzeichnis auf die bei einer bestimmten technischen Anlage oder einem Anlagentyp vorhandenen bzw. benötigten Begriffe abgestimmt ist.

9. HMI Gerät nach einem der Ansprüche 7 oder 8 mit einem Tastenfeld (TV) von der Art der Tastatur eines mobilen Kommunikationsgeräts, insbesondere eines Mobiltelefons.

10. HMI Gerät nach einem der Ansprüche 7, 8 oder mit einem Touchscreen als Anzeigeelement und einem darauf zur Anzeige gebrachten, virtuellen Tastenfeld.

11. Automatisierungssystem, das auf eine technische Einrichtung einwirkt und an das mindestens ein HMI Gerät nach einem der vorangegangenen Ansprüche geschaltet oder in dieses integriert ist.
